# NEUE EUROPÄISCHE PATENTSCHRIFT

(11) **EP 2 888 157 B2**
(45) Veröffentlichungstag und Bekanntmachung des Hinweises auf die Entscheidung über den Einspruch: **05.08.2020**
(45) Hinweis auf die Patenterteilung: 01.03.2017
(21) Anmeldenummer: 13750585.5
(22) Anmeldetag: 20.08.2013
(51) Int. Cl.: B62K 25/04, B62J 1/00

(54) **ELEKTRONISCH GESTEUERTES FEDERUNGSSYSTEM, VERFAHREN ZUR STEUERUNG EINES FEDERUNGSSYSTEMS UND COMPUTERPROGRAMM**
ELECTRONICALLY CONTROLLED SUSPENSION SYSTEM, METHOD AND COMPUTER PROGRAM
SYSTÈME DE SUSPENSION À COMMANDE ÉLECTRONIQUE, METHODE ET PROGRAMME ASSOCIÉS.

(30) Priorität: 21.08.2012 DE 102012214867; 24.08.2012 DE 102012215062
(43) Veröffentlichungstag der Anmeldung: 01.07.2015
(60) Teilanmeldung: 17156524.5
(73) Patentinhaber: Gustav Magenwirth GmbH & Co. KG, 72574 Bad Urach (DE)
(72) Erfinder: BUTORA, Peter, 73581 Bohumín (CZ); BEIER, Jürgen, 89081 Ulm (DE); KÜNSTLE, Reiner, 72555 Metzingen (DE); KOLLER, Florian, 72555 Metzingen (DE); KERN, Christoph, 71263 Weil der Stadt (DE)
(74) Vertreter: Friese Goeden Patentanwälte PartGmbB
(86) Internationale Anmeldenummer: PCT/EP2013/067286
(87) Internationale Veröffentlichungsnummer: WO 2014/029759

(56) Entgegenhaltungen:
- EP-A1- 2 505 478
- WO-A1-98/39201
- WO-A2-2011/065759
- US-A1- 2011 202 236
- US-A1- 2011 202 236
- US-A1- 2011 204 201
- US-A1- 2013 221 713
- US-B1- 6 336 648

## Beschreibung

Die Erfindung betrifft eine elektronisch gesteuerte Sattelstütze für ein Fahrrad, enthaltend zumindest ein Federelement, welches zwischen einem ersten Teil des Fahrrades und einem zweiten Teil des Fahrrades angeordnet ist, welche beweglich miteinander verbunden sind, wobei zumindest eine Kenngröße des Federelementes veränderbar ist, und zumindest einen Aktor, welcher auf das Federelement einwirkt, um die zumindest eine Kenngröße zu verändern, und ein Elektronikmodul, mit welchem ein Ansteuersignal für den zumindest einen Aktor erzeugbar ist.

Aus der US 6,050,583 ist bekannt, ein Fahrrad mit einer Federung auszustatten. Diese wird durch ein Ölbad bedämpft, indem das Öl durch eine Bohrung im Kolben einer Kolben-Zylinder-Paarung der Federung strömt. Weiterhin weist diese bekannte Federung einen mikromechanischen Beschleunigungssensor auf und einen Aktor, so dass durch Variieren der Öffnungen die Dämpfungskraft an die auf das Fahrrad einwirkende Beschleunigung angepasst werden kann. Beschleunigungssensor, Regelelektronik und Aktor sind über Kabelverbindungen miteinander verbunden.

Diese bekannte Vorrichtung weist den Nachteil auf, dass die Kabelverbindungen korrodieren können oder bei Geländeeinsatz des Fahrrades abreißen, so dass die Betriebssicherheit der Vorrichtung nur gering ist. Weiterhin kann mit dieser bekannten Vorrichtung zwar die Dämpfung angepasst werden, nicht jedoch die Federkraft, so dass eine Anpassung an unterschiedliche Fahrbedingungen nur rudimentär möglich ist.

Aus US 2011/204201 A1 ist bekannt, eine Sattelstütze mit Controller und mit einer Festlegevorrichtung im Einklang mit dem Oberbegriff des Anspruch 1.

Ausgehend von diesem Stand der Technik liegt der Erfindung die Aufgabe zugrunde, eine elektrische Sattelstütze für ein Fahrrad anzugeben, welche eine verbesserte Betriebssicherheit aufweist und/oder unterschiedliche Einstellmöglichkeiten bietet, so dass eine automatisierte Anpassung an unterschiedliche Betriebszustände möglich ist.

Die Aufgabe wird erfindungsgemäß durch eine elektronisch gesteuerte Dattelstütze gemäß Anspruch 1 gelöst.

Ein Federungssystem kann entweder nur am Vorderrad eines Fahrrades angeordnet sein. In anderen Ausführungsformen kann das Federungssystem sowohl am Vorder- als auch am Hinterrad angeordnet sein. In selteneren Ausführungsformen kann das Federungssystem auch nur am Hinterrad angeordnet sein. In wiederum einer anderen Ausführungsform kann das Federungssystem in einer Sattelstütze und/oder in einem Gabelschaft angeordnet sein. Die Aufgabe des Federungssystems besteht einerseits darin, den Fahrkomfort für den Benutzer des Fahrrades zu erhöhen. Darüber hinaus kann das Federungssystem eine verbesserte Haftung der Räder auf dem Untergrund ermöglichen, so dass die Traktion verbessert sein kann und/oder höhere Lenk- oder Bremskräfte übertragen werden können. Hierdurch kann die Fahrsicherheit oder die Geländegängigkeit des Fahrrades positiv beeinflusst werden.

Das Fahrrad kann in einigen Ausführungsformen ein muskelgetriebenes, zweirädriges Fahrzeug sein, beispielsweise ein Mountainbike, ein Trekkingrad oder ein Straßenrennrad. In einigen Ausführungsformen kann das Fahrrad drei Räder aufweisen, also beispielsweise zwei Vorder- und ein Hinterrad oder ein Vorder- und zwei Hinterräder. In einigen Ausführungsformen kann das Fahrrad einen Elektromotor aufweisen, welcher das Fahrrad entweder zumindest zeitweise alternativ zum muskelbetriebenen Tretantrieb antreibt oder welches den Fahrer beim Treten unterstützt. Hierdurch kann das Fahrrad bei gleichem Energieeinsatz des Fahrers eine höhere Geschwindigkeit und/oder eine größere Reichweite erreichen und/oder steilere Anstiege bewältigen.

Das Fahrrad weist zumindest ein Federelement auf, welches zwischen einem ersten Teil des Fahrrades und einem zweiten Teil des Fahrrades angeordnet ist, welche beweglich miteinander verbunden sind. Beispielsweise kann der erste, unbewegliche Teil des Fahrrades der Rahmen des Fahrrades sein oder die Standrohre einer Gabel oder der mit dem Rahmen verbindbare Teil einer Sattelstütze. Der zweite, bewegliche Teil des Fahrrades kann durch die Tauchrohre einer Gabel gebildet sein oder durch eine beweglich gelagerte Hinterbaukinematik eines Hinterradfederungssystems oder der mit dem Sattel verbindbare Teil einer Sattelstütze. Sowohl das Eigengewicht des Fahrrades, das Gewicht des Benutzers als auch dynamisch einwirkende Stöße auf die Laufräder führen zu einer relativen Bewegung zwischen dem ersten Teil und dem zweiten Teil des Fahrrades. Das Federelement wirkt dieser Bewegung entgegen.

Das Federelement kann in einigen Ausführungsformen der eine Blattfeder oder einer Schraubenfeder enthalten, beispielsweise aus Stahl. In anderen Ausführungsformen der kann das Federelement eine Luftfeder umfassen, d.h. eine Kolben-Zylinder-Paarung, welche ein geschlossenes Luftvolumen einschließt, welches bei Einwirken externer Kräfte komprimiert wird. Weiterhin kann das Federelement eine Einrichtung zur Erzeugung einer Dämpfungskraft aufweisen, beispielsweise ein Ölvolumen, welches durch Öffnungen eines Kolbens strömt.

Durch einen mechanischen Eingriff in Bauteile des Federelementes kann zumindest eine Kenngröße des Federelementes veränderbar sein. Durch Veränderung des Federelementes kann das Fahrverhalten des mit dem Federelement ausgestatteten Fahrrades verändert werden, beispielsweise kann die Energiedissipation in der Federung reduziert sein oder das Ansprechverhalten an unterschiedliche Untergründe angepasst werden. Die beeinflussbare Kenngröße des Federelementes kann ausgewählt sein aus der Federkraft der Druckstufe und/oder der Dämpfungskraft und/oder dem Federweg und/oder dem Lock-out, d.h. einer Festlegevorrichtung, mit welcher die Federung vollständig blockiert werden kann. Hierzu kann das Federelement mit einem Betätigungshebel und/oder einem Einstellrad ausgestattet sein, welcher in an sich bekannter Weise die mechanischen Eingriffe am Federelement vornimmt, um die gewünschten Änderungen durchzuführen. Die mechanischen Eingriffe können beispielsweise das Öffnen oder Schließen eines Ventils umfassen oder die Veränderung der Vorspannung einer Feder oder das Verändern der lichten Weite von zumindest einer Öffnung oder das Anlegen eines elektrischen Feldes oder das Anlgen eines Magnetfeldes.

Es wird nun vorgeschlagen, das Bedienelement des Federelementes über zumindest einen Aktor zu betätigen, welcher auf das Federelement einwirkt, um die zumindest eine Kenngröße zu verändern.

Der Aktor wird mit einem Ansteuersignal betätigt, welches beispielsweise ein pulsweitenmoduliertes elektrisches Signal sein kann. In anderen Ausführungsformen kann das Ansteuersignal ein analoges Strom- oder Spannungssignal sein. Dieses kann entweder die Ein- und Ausschaltzeit eines Aktors bestimmen oder dessen Absolutposition. Das Ansteuersignal wird durch ein Elektronikmodul erzeugt.

Das Elektronikmodul erzeugt das Ansteuersignal in Abhängigkeit von zumindest einer Eingangsgröße, welche mit zumindest einem Steuerelement erzeugbar ist. Das Steuerelement kann die Eingangsgröße entweder in Abhängigkeit es Fahrerwunsches erzeugen oder automatisiert aus Messwerten, welche den jeweiligen Betriebszustand des Fahrrads erfassen.

Es wird nun vorgeschlagen, das Steuerelement mit dem Elektronikmodul bevorzugt über ein Funksignal zu verbinden und/oder den Aktor mit dem Elektronikmodul über ein Funksignal zu verbinden. Hierdurch wird eine Verkabelung am Fahrradrahmen eingespart, so dass einerseits Gewicht eingespart werden kann und andererseits eine zuverlässige Übertragung der Signale ermöglicht wird, da eine Beschädigung des Kabels unmöglich ist. Das Funksignal kann digital oder analog codiert sein. In einigen Ausführungsformen kann das Funksignal im Frequenzband um 433 MHz gewählt sein. In anderen Ausführungsformen kann das Funksignal im Frequenzband um 2,4 GHz gewählt sein. Das Funksignal kann verschlüsselt werden, so dass eine Störung unterschiedlicher, nebeneinander fahrender Fahrräder vermieden wird. Weiterhin kann das elektronisch gesteuerte Fahrwerk nicht von außen manipuliert werden, wenn das Funksignal verschlüsselt ist. Die Verschlüsselung kann mit an sich bekannten Kryptographieverfahren erfolgen, beispielsweise AES, WPA, WEP oder anderen Verfahren. Das Funksignal kann eine an sich bekannte Schnittstelle realisieren, z.B. WLAN oder Bluetooth oder Near-Field-Communication (NFC).

In einigen Ausführungsformen kann das Steuerelement ein Bedienelement und/oder einen Lagesensor und/oder einen Positionssensor und/oder einen Beschleunigungssensor enthalten. Über das Bedienelement kann der Benutzer des Fahrrades manuell eingreifen und beispielsweise die Federung blockieren oder die Dämpfungskraft und/oder den Federweg an ein gewünschtes Dämpfungsverhalten anpassen. In anderen Ausführungsformen kann das Steuerelement einen Lagesensor enthalten, welcher beispielsweise eine Seitenneigung des Fahrrades bei Kurvenfahrt detektiert und/oder Steigung und Gefälle erkennt, so dass bei Abfahrten eine weichere Federkennlinie gewählt werden kann und in Anstiegen mit großen Pedalkräften eine härtere Federkennlinie gewählt werden kann, um unbeabsichtigtes Wippen des Fahrwerkes zu vermeiden oder zu reduzieren. Zum gleichen Zweck kann auch ein optionaler Drehmomentsensor eingesetzt werden, welcher die vom Fahrer aufgebrachte Pedalkraft erkennt. In einigen Ausführungsformen kann das Steuerelement alternativ oder zusätzlich einen Positionssensor enthalten, mit welchem die Position des Fahrrades auf der Erdoberfläche erkennbar ist. In einigen Ausführungsformen kann der Positionssensor ein Funknavigationssystem sein oder enthalten, beispielsweise GPS, Glonass, Compass oder Galileo. Zur Erhöhung der Genauigkeit kann der Positionssensor auch zusätzliche terrestrische Funksignale empfangen und verarbeiten. Zusätzliche terrestrische Funksignale können ausgewählt sein aus Differential-GPS oder einem Mobilfunksignal wie GSM, LTE oder UMTS.

In einigen Ausführungsformen der Erfindung kann das Steuerelement ein Mobiltelefon enthalten oder aus einem Mobiltelefon bestehen. Das Mobiltelefon kann mit einer an sich bekannten Funkverbindung, wie beispielsweise Bluetooth, mit dem Elektronikmodul verbunden werden. In anderen Ausführungsformen der Erfindung kann das Mobiltelefon mit einer Kabelverbindung mit dem Elektronikmodul verbunden sein, beispielsweise über eine USB-Schnittstelle. Über die Benutzerschnittstelle des Mobiltelefons kann das System mittels Benutzereingriffen geregelt bzw. gesteuert werden und/oder das Elektronikmodul kann aktuelle Konfigurationsdaten über das Display des Mobiltelefons ausgeben. Dazu kann auf dem Mobiltelefon eine Software ausgeführt werden, welche die Benutzereingaben in ein Ansteuersignal übersetzt. In einigen Ausführungsformen kann das Mobiltelefon über eine GSM-Schnittstelle, über eine GPRS-Schnittstelle, über eine LTE-Schnittstelle oder eine vergleichbare Schnittstelle Softwareupdates oder Konfigurationsdaten oder topographische Informationen aus einem Onlinespeicher abrufen und dem Elektronikmodul zur Verfügung stellen oder eine Sicherheitskopie des Speicherinhaltes des Elektronikmoduls auf dem Onlinespeicher ablegen.

In einigen Ausführungsformen der Erfindung kann das Elektronikmodul ein Mobiltelefon enthalten oder aus einem Mobiltelefon bestehen. Das Mobiltelefon kann mit einer an sich bekannten Funkverbindung, wie beispielsweise Bluetooth, mit den Aktoren und/oder zumindest einem Steuerelement verbunden werden. In einigen Ausführungsformen der Erfindung kann das Mobiltelefon zusätzlich als Bedienelement verwendet werden. Dadurch kann Gewicht eingespart werden, da kein separates Elektronikmodul und/oder Bedienelement am Fahrrad verbaut werden muss. Auch die Stromversorgung des Elektronikmoduls und ein GPS-System zur Ortung sowie ein Speicher für Topographiedaten kann eingespart werden, wenn das Mobiltelefon mit diesen Komponenten ausgestattet ist. Der Akkumulator des Mobiltelefons wird vom Benutzer ohnehin regelmäßig aufgeladen, so dass ein separates Laden der Elektronikeinheit des Fahrrades entfallen kann. In anderen Ausführungsformen der Erfindung kann ein zusätzliches Bedienelement am Fahrradlenker befestigt sein, welches beispielsweise über eine Funkschnittstelle oder eine kabelgebundene Schnittstelle mit dem Mobiltelefon verbunden ist. Diese Ausführungsform hat den Vorteil, dass das Mobiltelefon stoß- und staubgeschützt mitgeführt werden kann, beispielsweise im Rucksack, und dennoch ein unmittelbarer Zugriff des Benutzers auf das Federungssystem bestehen bleibt und der Benutzer über den Zustand des Systems informiert werden kann.

In einigen Ausführungsformen kann das Elektronikmodul einen Kartenspeicher zur Aufnahme topographischer Informationen enthalten. Die topographischen Informationen können einen Straßenverlauf repräsentieren oder einen Fahrbahnbelag, um so automatisch aus der Position des Fahrrades und der gewählten Fahrtroute eine stets optimale Anpassung der Kenngrößen der Federelemente zu gewährleisten, ohne dass der Fahrer manuell eingreifen muss. So kann beispielsweise vor einer Kurve eine härtere Federkennlinie gewählt werden oder auf befestigten Straßen kann eine härtere Federkennlinie gewählt werden als auf einer Schotterstrecke. Ebenso können die topographischen Informationen Höhendaten enthalten, so dass die Kenngröße der Federelemente in Abhängigkeit von Anstieg oder Gefälle entsprechend gewählt werden kann.

In einigen Ausführungsformen kann das Federungssystem einen Geschwindigkeitssensor enthalten, welcher die Anpassung der Kenngröße zumindest eines Federelementes in Abhängigkeit der Fahrgeschwindigkeit erlaubt. In einigen Ausführungsformen kann der Geschwindigkeitssensor im Positionssensor integriert sein, welcher gleichzeitig Orts- und Geschwindigkeitsdaten ausgibt. Erfindungsgemäß enthält das Steuerelement einen Beschleunigungssensor, so dass bei großer Beschleunigung, welche eine entsprechende Kraft auf das Antriebsrad aufbringt, durch das Elektronikmodul die Federelemente so eingestellt werden können, dass die aufgebrachte Energie des Fahrers möglichst effektiv umgesetzt wird.

Das Elektronikmodul kann in einigen Ausführungsformen einen Mikroprozessor oder einen Mikrocontroller enthalten, um aus der Eingangsgröße ein Ansteuersignal zu erzeugen. Hierzu kann eine Software verwendet werden, welche ein neuronales Netz implementiert und/oder eine Fuzzy-Logik und/oder ein Steuer- bzw. Regelverfahren. Hierdurch ist sichergestellt, dass aus einer Vielzahl von Eingangsgrößen, welche teilweise auch unscharfe oder widersprüchliche Informationen geben können, stets ein optimales Ansteuersignal zur optimalen Einstellung der Federelemente gewonnen werden kann.

In einigen Ausführungsformen kann das Verfahren zur Steuerung der Federelemente einen selbstlernenden Algorithmus aufweisen, so dass durch Benutzereingriffe das Elektronikmodul die Vorlieben des Benutzers des Fahrrades erkennt und die Kenngrößen der Federelemente entsprechend wählt, so dass nach längerer Benutzung des Fahrrades durch einen Benutzer die Anzahl der Benutzereingriffe reduziert sein kann. Sofern das Fahrrad von mehreren Benutzern verwendet wird, kann das Elektronikmodul eine Mehrzahl von Speicherbereichen enthalten, so dass für unterschiedliche Benutzer unterschiedliche Kenndaten abgelegt werden können, so dass sich das Fahrverhalten des Fahrrades auch an mehrere unterschiedliche Benutzer anpassen kann.

Erfindungsgemäß enthält der Beschleunigungssensor einen dreiachsigen mikromechanischen Sensor oder besteht aus einem solchen. Dies ermöglicht einen kompakten, zuverlässigen kostengünstigen Aufbau des vorgeschlagenen Federungssystems, wobei der Sensor in einigen Ausführungsformen zusammen mit dem Elektronikmodul auf einer Leiterplatte integriert sein kann.

Erfindungsgemäß ist der mikromechanische Sensor ein dreiachsiger Sensor, welcher eine Beschleunigung in drei Achsen erkennen kann. Hierdurch kann sowohl eine geradlinige Beschleunigung bzw. ein Abbremsen des Fahrrades erkannt werden als auch eine Querbeschleunigung, welche bei Kurvenfahrt auftritt. Schließlich kann erkannt werden, ob das Fahrrad mit der Erdbeschleunigung oder einem Wert nahe der Erdbeschleunigung in Richtung auf den Boden beschleunigt wird. In diesem Fall ist das Fahrrad vollständig in der Luft, beispielsweise bei Sprüngen, so dass die Kennlinie des Federungssystems auf den mit der Landung verbundenen harten Stoß eingestellt werden kann.

Erfindungsgemäß ist der mikromechanische Sensor ein dreiachsiger Sensor, welcher eine Beschleunigung in drei Achsen erkennen kann. Durch Integration der Beschleunigung über die Zeit kann eine Geschwindigkeit in allen drei Raumrichtungen bzw. die zeitliche Änderung der Lage im Raum durch die Elektronikeinheit bestimmt werden. Durch Integration der Geschwindigkeit über die Zeit kann die Lage des Fahrrades im Raum bestimmt werden. Aus diesen Daten lassen sich mit nur einem dreiachsigen mikromechanischen Sensor eine Vielzahl von Fahrzuständen erkennen. Wenn das Fahrrad nach hinten geneigt ist, d.h. das Vorderrad ist höher als das Hinterrad, so fährt der Fahrer bergauf. In diesem Fall kann eine härtere Federkennlinie gewählt oder die Federung blockiert oder eine höhenverstellbare Sattelstütze in eine hohe Position gebracht oder eine absenkbare Federgabel in eine untere, abgesenkte Position gebracht werden. Wenn das Fahrrad nach vorne geneigt ist, d.h. das Vorderrad ist tiefer als das Hinterrad, so fährt der Fahrer bergab. In diesem Fall kann eine weichere Federkennlinie gewählt oder die blockierte Federung wieder frei gegeben oder eine höhenverstellbare Sattelstütze in eine tiefe Position gebracht oder eine absenkbare Federgabel in eine obere Position gebracht werden. Wenn das Fahrrad eine Seitenneigung aufweist, durchfährt der Fahrer eine Kurve. In diesem Fall kann eine härtere Federkennlinie gewählt oder die Federung blockiert werden. Wenn sich die Seitenneigung zyklisch ändert und/oder die Beschleunigung in Fahrtrichtung größer als ein vorgebbarer Grenzwert ist, fährt der Fahrer im Wiegetritt. In diesem Fall kann eine härtere Federkennlinie gewählt oder die Federung blockiert werden.

In einigen Ausführungsformen kann das Bedienelement zusammen mit einem Bremshebel und/oder einem Schalthebel an einem gemeinsamen Befestigungselement angeordnet sein. Hierdurch wird die Anzahl der Klemmschellen am Lenker reduziert, so dass einerseits eine gute Erreichbarkeit des Bedienelementes gegeben ist und andererseits die Gefahr der Beschädigung des Lenkerrohres durch Klemmschellen minimiert ist.

In einigen Ausführungsformen kann der Aktor ausgewählt sein aus einem Elektromotor und/oder einem Magnetsteller und/oder einem Piezosteller und/oder einem Steller, welcher eine Formgedächtnislegierung enthält oder daraus besteht. Ein Elektromotor kann ein Schrittmotor sein, welcher kontrolliert drehbar ist und/oder ein Getriebemotor, welcher an seiner Außenseite eine geringere Drehzahl bereitstellt als der Rotor. Ein Getriebemotor kann ein Schneckengetriebe aufweisen. Dieses ist selbsthemmend, so dass eine einmal gewählte Position ohne weiteren Stromverbrauch beibehalten werden kann. Ein Elektromotor weist den Vorteil auf, dass der Stromverbrauch nur gering ist, da der Elektromotor nur dann bestromt werden muss, wenn tatsächlich eine Veränderung der Kenngrößen der Federelemente vorgenommen wird. Zur Bestromung des Elektromotors kann eine H-Brückenschaltung eingesetzt werden. Ein Magnetsteller und ein Piezosteller weisen den Vorteil auf, dass diese sehr schnelle Veränderungen der Kenngrößen der Federelemente vornehmen können, so dass eine rasche Anpassung an dynamische Fahrzustände möglich ist.

Ein Aktor, welcher eine Formgedächtnislegierung enthält oder daraus besteht kann in einigen Ausführungsformen dazu eingesetzt werden, auf den Verschluss eines Ventiles einzuwirken, so dass eine Ventilöffnung geschlossen oder geöffnet oder deren lichter Querschnitt beeinflusst werden kann. Hierdurch kann das Durchströmen eines Fluides wie Luft oder Öl beeinflusst werden. Dies kann zur Beeinflussung der Dämpfungskraft oder zur völligen Blockierung der Federung führen (Lockout). In einer weiteren Ausführungsform kann durch ein Drehventil eine Ventilöffnung geschlossen oder geöffnet oder deren lichter Querschnitt beeinflusst werden. Der Antrieb des Drehventils kann über einen Elektromotor oder ein Element aus einer Formgedächtnislegierung erfolgen.

In einigen Ausführungsformen kann die Dämpfungskraft zumindest eines Federelementes durch eine elektrorheologische Flüssigkeit eingestellt werden, deren Viskosität sich in Abhängigkeit eines elektrischen Feldes ändert. In diesem Fall kann der Aktor eine oder mehrere Elektroden aufweisen, welche nach Art eines Platten- oder Ringkondensators das im Dämpfungselement befindliche Öl bzw. die elektroriologische Flüssigkeit einem elektrischen Feld aussetzen.

In einigen Ausführungsformen der Erfindung kann das Elektronikmodul zumindest einen ersten Betriebszustand und zumindest einen zweiten Betriebszustand aufweisen, wobei im zweiten Betriebszustand gegenüber dem ersten Betriebszustand die Anzahl ausführbarer Funktionen reduziert und der Energieverbrauch vermindert ist. Hierdurch kann die Lebensdauer der Batterie im Elektronikmodul vergrößert sein, da nur dann die volle Funktionsvielfalt und der volle Energieverbrauch zur Verfügung stehen, wenn das Fahrrad tatsächlich bewegt wird. Die Anzahl ausführbarer Funktionen im zweiten Betriebszustand, welcher auch als Energiesparzustand bezeichnet sein kann, kann soweit reduziert werden, dass die Komponenten lediglich die Benutzung des Fahrrades überwachen, um wieder in den ersten Betriebszustand zurück zu schalten. Auf diese Weise kann, ohne dass der Benutzer aktiv das System einschalten muss, eine stetige Verfügbarkeit sichergestellt werden, ohne dass die Batterien rasch, beispielsweise über Nacht, entladen sind. Das Umschalten des Betriebszustandes kann durch einen mikromechanischen Beschleunigungssensor erfolgen, welcher dann in den zweiten Betriebszustand schaltet, wenn während einer vorgebbaren Zeit keine Beschleunigung registriert wird und welcher in den ersten Betriebszustand schaltet, wenn erstmals wieder eine Beschleunigung registriert wird.

In einigen Ausführungsformen kann das Steuerelement und/oder das Elektronikmodul zumindest eine Betriebszustandsanzeige enthalten. In einigen Ausführungsformen kann die Betriebszustandsanzeige zumindest eine LED und/oder zumindest ein LCD-Display enthalten. Bevorzugt, aber nicht zwingend, ist die Betriebszustandsanzeige in einem Bedienelement angeordnet, welches am Lenker des Fahrrades befestigt ist oder auf dem Display eines Mobiltelefons. Hierdurch ist die Betriebszustandsanzeige im Blickfeld des Fahrers. Die Betriebszustandsanzeige kann beispielsweise den aktuell anliegenden Betriebszustand bzw. die aktuell gewählten Kenngrößen der Federelemente anzeigen. Darüber hinaus kann die Betriebszustandsanzeige eine Warnung bei niedrigem Batteriestand ausgeben. Schließlich kann die Betriebszustandsanzeige dazu eingerichtet sein, das Aushandeln einer Funkfrequenz und/oder eines Sendeprotokolls zwischen dem Steuerelement und dem Elektronikmodul anzuzeigen oder zu unterstützen.

In einigen Ausführungsformen kann die zu verändernde Kenngröße der Federelemente ausgewählt sein aus einer Federkraft und/oder einer Dämpfungskraft und/oder einem Federweg und/oder einer Nulllage. Beispielsweise kann der Federweg auf befestigten Fahrbahnen bis auf Null reduziert werden, so dass sich ein sicheres Fahrverhalten und eine unmittelbare Umsetzung der eingebrachten Antriebsleistung im Vortrieb ergibt. Auf schlechteren Fahrbahnen kann der Federweg einstufig oder mehrstufig vergrößert werden, bis der volle Federweg auf sehr unebenem Untergrund zur Verfügung steht.

In einigen Ausführungsformen kann die Federkraft angepasst werden, so dass sich ein eher komfortables Ansprechen oder ein eher festes Ansprechen der Federelemente ergibt.

Schließlich kann die Nulllage angepasst werden, d.h. die Position der Federelemente bei unbelastetem Fahrwerk. So kann bei Bergauffahrt beispielsweise eine Federgabel abgesenkt werden, um eine günstigere Gewichtsverteilung zu ermöglichen. Bei Bergabfahrt kann die Gabelabsenkung wieder aufgehoben werden, um den vollen Federweg zur Verfügung zu haben.

Nachfolgend soll die Erfindung anhand von Figuren ohne Beschränkung des allgemeinen Erfindungsgedankens näher erläutert werden. Dabei zeigt
- Figur 1: ein Ausführungsbeispiel eines Fahrrades.
- Figur 2: zeigt ein Blockschaltbild der verwendeten elektronischen Komponenten.
- Figur 3: zeigt eine Ansicht eines Bedienelementes.
- Figur 4: zeigt das Bedienelement im Schnitt.
- Figur 5: zeigt eine mögliche Montage des Bedienelementes.
- Figur 6: zeigt eine zweite mögliche Montage des Bedienelementes.
- Figur 7: zeigt ein Bedienelement mit einem Teil eines Lenkerrohres.
- Figur 8: zeigt ein Federelement gemäß einer ersten Ausführungsform in der Ansicht.
- Figur 9: zeigt das Federelement gemäß der ersten Ausführungsform im Schnitt.
- Figur 10: zeigt einen Ausschnitt aus Figur 9.
- Figur 11: zeigt eine zweite Ausführungsform eines Federelementes in einer ersten Ansicht.
- Figur 12: zeigt eine zweite Ausführungsform des Federelementes in einem ersten Schnitt.
- Figur 13: zeigt die zweite Ausführungsform des Federelementes in einer zweiten Ansicht.
- Figur 14: zeigt eine zweite Ausführungsform des Federelementes in einem zweiten Schnitt.
- Figur 15: zeigt ein Detail des Federelementes gemäß der zweiten Ausführungsform im Schnitt.
- Figur 16: zeigt eine Ausführungsform der erfindungsgemäßen Sattelstütze.

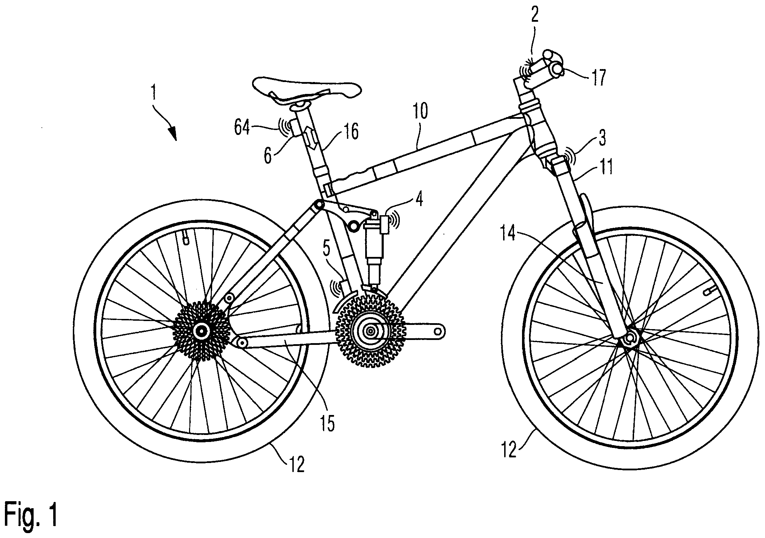

Figur 1 zeigt ein Fahrrad 1 gemäß einer Ausführungsform. Das Fahrrad 1 weist einen Rahmen 10 auf, welcher für die Zwecke der nachfolgenden Beschreibung einen ersten, feststehenden Teil des Fahrrades repräsentiert. Der Rahmen 10 trägt in an sich bekannter Weise über eine Sattelstütze 16 einen Sattel sowie eine Tretkurbel, mit welcher ein Benutzer eine Antriebskraft erzeugen kann. Die Antriebskraft bzw. das Drehmoment kann über einen Drehmomentsensor 5 erfasst werden. Über eine Kette und eine optionale Schaltung wird die Antriebkraft auf das hintere Laufrad 12 übertragen.

Die Sattelstütze 16 ist höhenverstellbar, so dass der Fahrer bergauf oder in der Ebene eine hohe Sitzposition einnehmen kann, welche eine bessere und ergonomische Kraftübertragung auf die Tretkurbel erlaubt. Bei Bergabfahrt kann die Sattelstütze eingefahren werden, so dass sich eine tiefe Sitzposition mit günstiger Schwerpunktlage ergibt. Die Höhenverstellung der Sattelstütze kann wie bei einem Bürostuhl über eine Gasdruckfeder oder eine Stahlfeder erfolgen, so dass der Fahrer die Höhenverstellung während der Fahrt vornehmen kann und nicht absteigen muss. Das Auslösen der Höhenverstellung kann über ein Bedienelement am Lenker erfolgen, welches über eine Hydraulik oder einen Bowdenzug mit der Sattelstütze verbunden ist. Erfindungsgemäß erfolgt das Auslösen der Höhenverstellung über ein Funksignal. Das Funksignal kann beispielsweise über ein Bedienelement am Lenker abgesetzt werden, so dass ein Bowdenzug oder eine Hydraulikleitung nicht erforderlich ist. In anderen Ausführungsformen kann das Funksignal von der Elektronikeinheit in Abhängigkeit des Fahrzustandes abgesetzt werden, so dass neben der jeweils optimalen Einstellung von zumindest einem Federelement auch die Sattelhöhe automatisiert eingestellt wird.

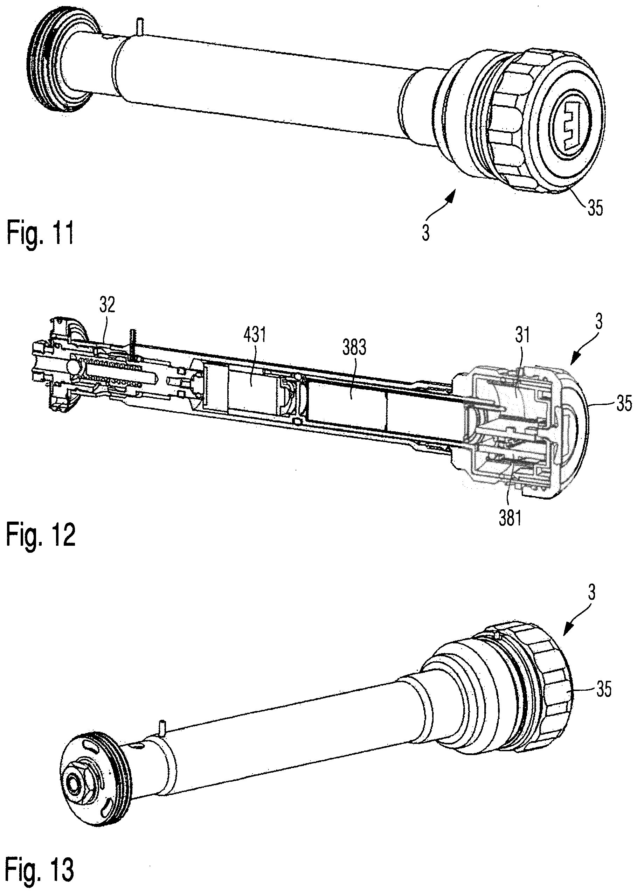

Das Fahrrad 1 weist zwei Laufräder 12 auf. Das vordere Laufrad 12 ist an einer Federgabel drehbar gelagert, um das Fahrrad 1 zu lenken. Die Federgabel weist Standrohre 11 auf, welche im Wesentlichen unbeweglich mit dem Rahmen 10 verbunden sind sowie Tauchrohre 14, in welche die Standrohre 11 beim Einfedern des Vorderrades eintauchen. Die dem Eintauchen entgegengesetzte Kraft wird durch ein Federelement 3 erzeugt, welches anhand der Figuren 11 bis 15 näher beschrieben wird. Zum Lenken des Fahrrades 1 dient ein Lenkerrohr 17, welches auch ein Bedienelement 2 trägt, so dass der Benutzer über die Betriebsparameter des Systems informiert werden kann und/oder manuell die Kenngrößen der Federelemente 3 und 4 beeinflussen kann.

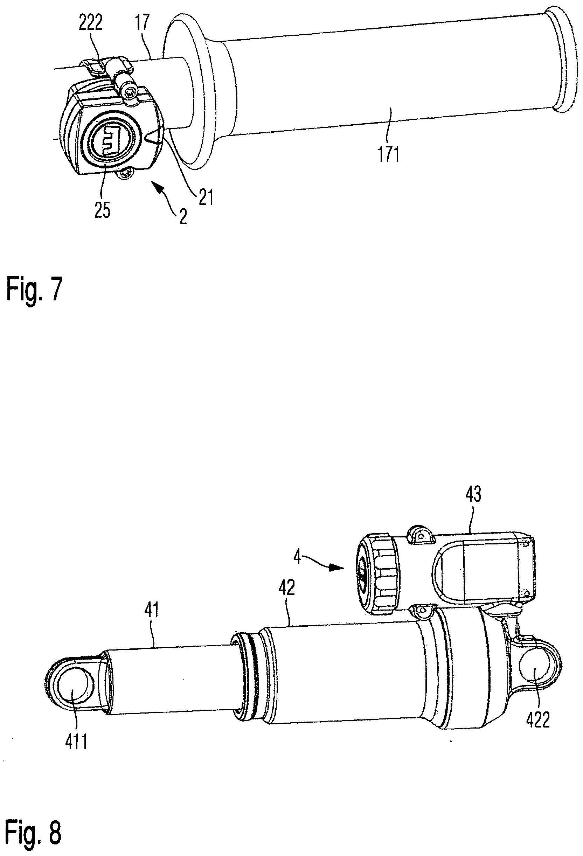

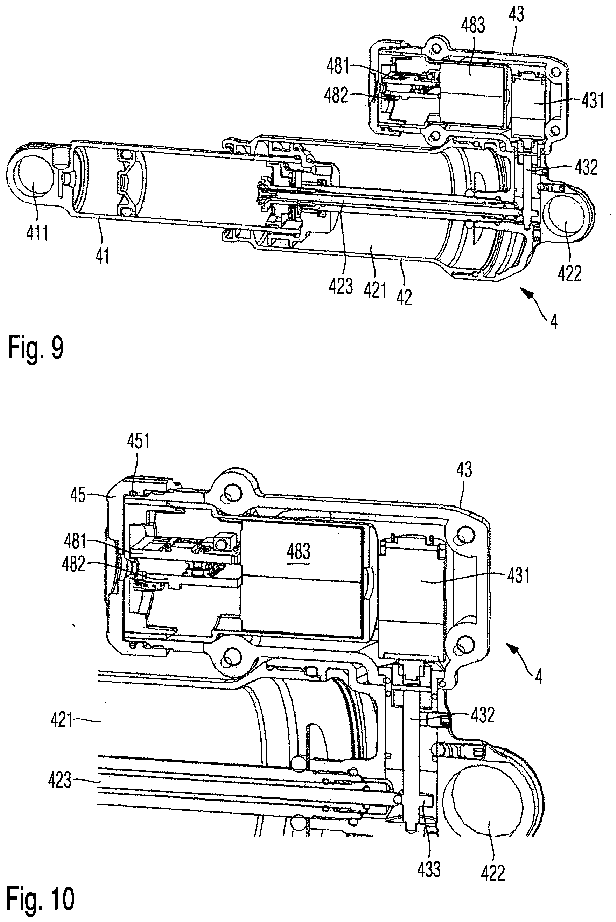

Das hintere Laufrad 12 ist an einem beweglichen Hinterbau 15 angeordnet. Die beim Einfedern bzw. bei Belastung auf den Rahmen 10 übertragenen Kräfte werden vom Federelement 4 aufgenommen. Die dabei dem einfedernden Hinterrad entgegengesetzten Kräfte werden durch die Kenngrößen des Federelementes 4 definiert, welches anhand der Figuren 8 bis 10 näher erläutert wird.

Schließlich ist an der Sattelstütze 16 ein Elektronikmodul 6 montiert, welches die Ansteuersignale für die in den Federelementen 3 und 4 befindlichen Aktoren erzeugt. Das Bedienelement 2, der Drehmomentsensor 5 und die Federelemente 3 und 4 sind über ein Funksignal 64 mit dem Elektronikmodul 6 verbunden. Dadurch kann einerseits Gewicht für Kabelverbindungen oder Bowdenzüge eingespart werden und andererseits eine hohe Betriebssicherheit sichergestellt werden, da weder elektrische Anschlusskontakte korrodieren können noch das Kabel mechanisch beschädigt werden kann. In einigen Ausführungsformen der Erfindung kann das Elektronikmodul 6 und/oder das Bedienelement 2 als Mobiltelefon ausgestaltet sein, auf welchem eine entsprechend angepasste Software ausgeführt wird. Hierdurch wird ein dediziertes, mit dem Fahrrad verbundenes Elektronikmodul eingespart.

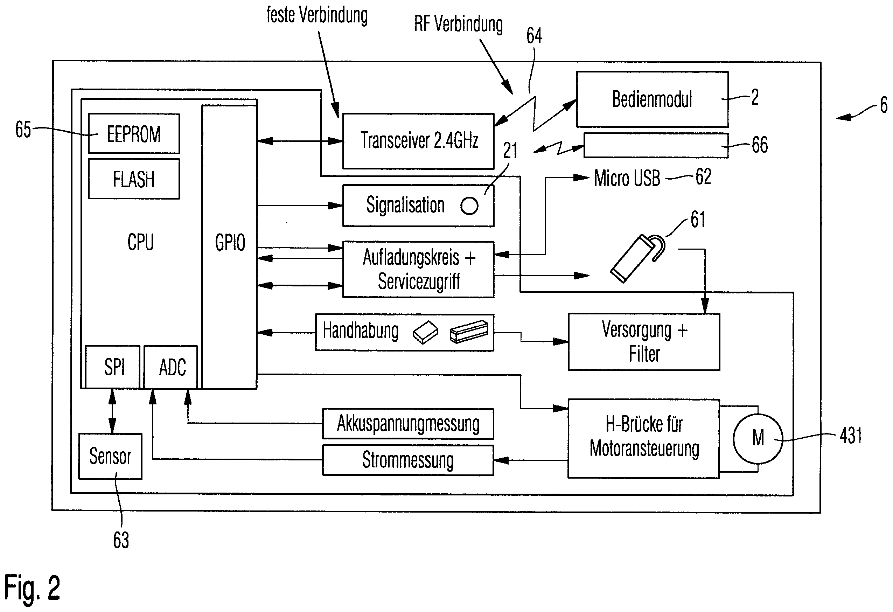

Figur 2 zeigt ein Blockschaltbild des Elektronikmoduls 6 und weiterer peripherer Komponenten. Das Elektronikmodul 6 enthält einen Mikroprozessor CPU, auf welchem ein Computerprogramm ausgeführt wird, welches aus Eingangsgrößen der Sensoren ein Ansteuersignal für die Aktoren errechnet. Das Computerprogramm kann in einem EEPROM 65 oder einem Flash-Speicher abgelegt sein, so dass die jeweiligen Daten auch beim Abschalten oder bei Tiefentladung der Batterie 61 nicht verlorengehen. Daneben kann der Flash-Speicher Konfigurationsdaten enthalten, beispielsweise Benutzervorlieben oder Topographiedaten, beispielsweise digitalisierte Landkarten mit Höheninformationen und/oder Informationen über die Fahrbahnbeschaffenheit. Daten können dem Mikroprozessor und den Speichern 65 über eine serielle Schnittstelle GPIO oder SPI und/oder einen Analog-Digital-Wandler ADC zugeführt werden. Diese Daten können Softwareupdates oder Topographiedaten enthalten, welche beispielsweise über eine USB-Schnittstelle 62 zugeführt werden können. Diese kann optional auch zum Laden des Akkumulators 61 eingesetzt werden. In anderen Ausführungsformen kann hierzu eine separate Ladeschnittstelle vorhanden sein oder der Akkumulator 61 wird nach dessen Entleerung ersetzt bzw. außerhalb des Elektronikmoduls 6 geladen. Die Spannung und/oder der dem Akku 61 entnommene Strom kann über den Analog-Digital-Wandler ADC von dem Mikroprozessor CPU überwacht werden. Hierdurch kann das Fahrwerk bei entladenem Akkumulator 61 in ein Notprogramm gebracht werden. In einigen Ausführungsformen kann das Elektronikmodul 6 mit der CPU, dem EEPROM 65, dem Speicher 65, der seriellen Schnittstelle GPIO oder SPI, der USB-Schnittstelle 62 und dem Akkumulator 61 in Form eines Mobiltelefons bzw. eines Smartphones oder eines Tablet-Computers ausgestaltet sein.

Schließlich kann das Elektronikmodul 6 einen Beschleunigungssensor 63 enthalten, mit welchem die Änderung der Fahrgeschwindigkeit und/oder eine Kurvendurchfahrt erkennbar ist. In anderen Ausführungsformen kann der Beschleunigungssensor 63 auch in einer separaten Baugruppe am Fahrrad 1 angebracht sein oder Teil des Bedienelementes 2 sein und seine Daten über ein Funksignal 64 weiterleiten. Analog wie für den Beschleunigungssensor 63 beschrieben, kann das Elektronikmodul 6 auch einen Lagesensor, einen Geschwindigkeitssensor oder einen Positionssensor enthalten. In Figur 2 ist der Positionssensor 66 als separate Baugruppe ausgebildet, welche über ein Funksignal 64 mit dem Elektronikmodul 6 verbunden ist. Erfindungsgemäß ist ein dreiachsiger Beschleunigungssensor vorhanden, aus dessen Daten durch Integration über die Zeit ein Geschwindigkeitsvektor und ein Lagevektor berechnet werden können. Zur Bestimmung eines Koordinatennullpunktes kann eine Initialisierung erfolgen, indem das Fahrrad auf einem ebenen Platz aufrecht abgestellt wird und nachfolgend diese Position als horizontale Ruhelage abgespeichert wird. Alle weiteren Positionen, wie z.B. Seitenneigung, Bergauffahrt, Bergabfahrt und die aktuelle Geschwindigkeit ergeben sich daraus durch Integration der Beschleunigungen in allen drei Raumrichtungen. Sofern das Fahrrad bei der Initialisierung nicht aufrecht steht, sondern beispielsweise mit erhöhtem Vorder- oder Hinterrad, kann auch ein abeichender Koordinatennullpunkt durch den Fahrer gewählt werden. Dies erlaubt eine individuelle Feinabstimmung.

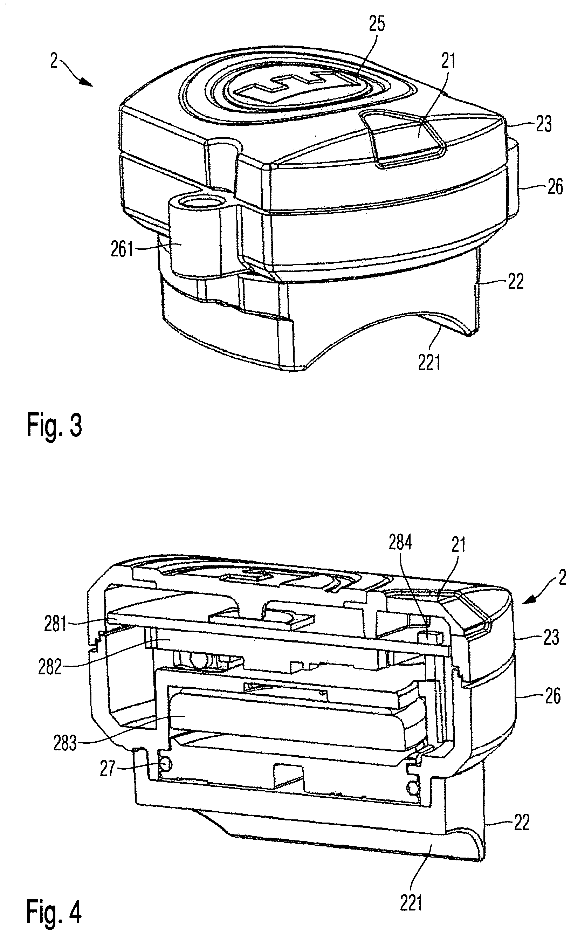

Schließlich zeigt Figur 2, wie ein Bedienelement 2 über ein Funksignal 64 mit dem Elektronikmodul 6 verbunden werden kann. Das Bedienelement 2 selbst wird nachfolgend anhand der Figuren 3 bis 7 näher erläutert. Das Elektronikmodul 6 gemäß Figur 2 enthält weiter eine Betriebszustandsanzeige 21. In anderen Ausführungsformen kann diese Bestandteil des Bedienelementes 2 sein oder in einem Federelement 3 oder 4 integriert sein.

Das Elektronikmodul 6 kann eine optionale H-Brücke zur Motoransteuerung enthalten, wenn der Aktor 431 zumndest einen Elektromotor enthält. In anderen Ausführungsformen kann der Elektromotor 431 zusammen mit der H-Brücke auch Bestandteil des Federelementes 3 oder 4 sein, so dass diese Bestandteile nicht im Elektronikmodul 6 integriert sein müssen.

Die Figuren 3 bis 7 zeigen eine Ausführungsform eines Bedienelementes 2. Dabei sind gleiche Teile mit gleichen Bezugszeichen versehen, so dass zur Vermeidung von Wiederholungen nicht sämtliche Bauteile im Zusammenhang mit allen Figuren erläutert werden.

Das Bedienelement 2 weist im dargestellten Ausführungsbeispiel ein dreiteiliges Gehäuse auf. Dabei weist das untere Gehäuseteil 22 eine konkave Innenfläche 221 auf, mit welcher der untere Gehäuseteil 22 an einem Lenkerrohr 17 anliegen kann. Dies erlaubt eine sichere Montage, so dass das Bedienelement 2 vor Verdrehen, Verkippen und Verrutschen geschützt ist. Der mittlere Gehäuseteil 26 ist zur Aufnahme einer Batteriezelle 283 vorgesehen, beispielsweise eine Lithiumionenbatterie, einer Alkalibatterie oder einer Zink-Luft-Batterie. Das Eindringen von Feuchtigkeit zwischen dem mittleren Gehäuseteil 26 und dem unteren Gehäuseteil 22 wird durch eine Dichtung 27 verhindert. Eine Schraubverbindung erlaubt leichtes Öffnen und Schließen, so dass die Batterie 283 einfach gewechselt werden kann. Der obere Gehäuseteil 23 weist einerseits ein Sichtfenster 21 auf, durch welches Licht einer Leuchtdiode 284 den Betrachter erreichen kann. Hierdurch kann eine Betriebszustandsanzeige realisiert werden, wenn die Leuchtdiode 284 Licht unterschiedlicher Farben oder unterbrochenes Licht mit unterschiedlichen Blinkmustern aussendet. Weiterhin weist das obere Gehäuseteil 23 einen Druckknopf 25 auf, durch welchen der Fahrer im Stand oder während der Fahrt Steuersignale an das Elektronikmodul 6 senden kann. Hierzu weist das Bedienelement 2 eine einfache elektronische Schaltung auf, welche auf einer Platine 281 angeordnet ist und das Drücken des Tasters 25 erkennt sowie die Leuchtdiode 284 trägt und mit elektrischer Energie versorgt.

Darunter ist eine zweite Platine 282 angeordnet, welche ein Hochfrequenz-Interface trägt, um eine Funkverbindung zum Elektronikmodul 6 herzustellen. Durch die zweiteilige Ausführung kann der sendende HF-Teil der Schaltung leicht ausgetauscht werden, um unterschiedliche gesetzliche Bestimmungen in unterschiedlichen Ländern zu erfüllen oder eine Anpassung an unterschiedliche Sendeprotokolle zu ermöglichen.

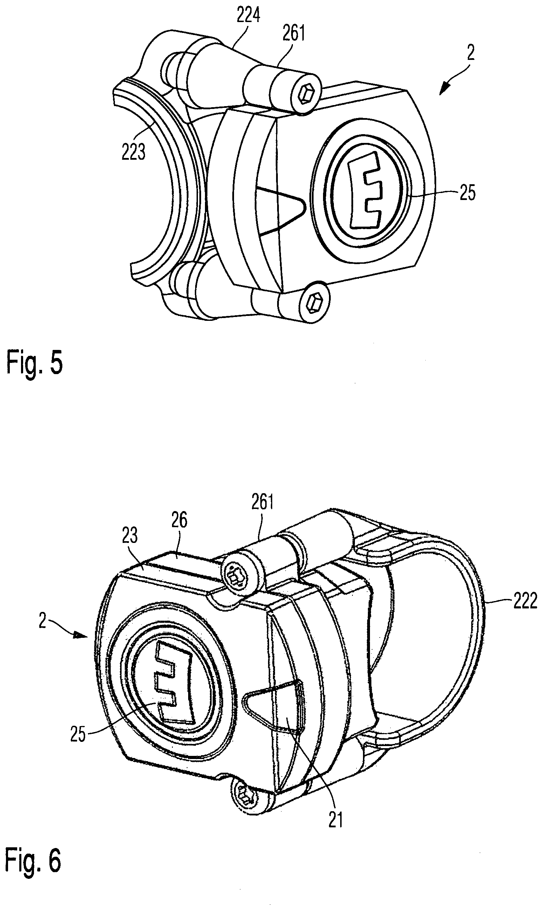

Die Figuren 6 und 7 zeigen die Befestigung des Bedienelementes 2 über eine Verschraubung 261 mit einer optionalen Schelle 222. Hierdurch kann das Bedienelement 2 an einer beliebigen Stelle eines Lenkerrohres 17 positioniert werden. Vorteilhaft befindet sich das Bedienelement 2 in der Nähe eines Griffes 171, so dass der Benutzer den Taster 25 erreichen kann, ohne die Hände vom Lenker zu nehmen. Dies erlaubt eine sichere Bedienung des Fahrrades und eine Einstellung des Federungssystems in jedem Fahrzustand.

Figur 5 zeigt eine alternative Befestigungsform an einer vorhandenen Befestigungsschelle 223. Die Befestigungsschelle 223 kann Bestandteil eines Brems- und/oder Schalthebels sein, welcher ohnehin bereits am Lenkerrohr 17 befestigt ist, um die Betätigung einer Bremse oder einer Schaltung zu ermöglichen. Das Bedienelement 2 kann über Abstandsbolzen 224 und eine Verschraubung 261 zusätzlich an der Schelle 223 befestigt werden, so dass die Verwendung einer weiteren Schelle 222 entbehrlich ist. Hierdurch kann einerseits Gewicht eingespart werden als auch die Zuverlässigkeit erhöht werden, da die Kerbwirkung einer weiteren Schelle 222 auf das Lenkerrohr 17 entfällt. Schließlich ergibt sich für den Benutzer eine aufgeräumte und attraktive Optik.

Anhand der Figuren 8 bis 10 wird eine Ausführungsform eines Federelementes 4 erläutert (nicht zur Erfindung gehörend). Auch in diesem Fall bezeichnen gleiche Bezugszeichen gleiche Bestandteile des Federelementes 4. Wie aus Figur 1 ersichtlich, ist das Federelement 4 zum Einsatz an einem gefederten Hinterbau bzw. einer Hinterradfederung vorgesehen. Das Federelement weist einen Grundkörper 42 auf, in welchem sich eine Luftkammer 421 befindet. Der Kolben 41 gleitet in der Luftkammer 421, wobei die komprimierte Luft dem Kolben 41 einen Widerstand entgegensetzt. Mit den Befestigungsösen 422 und 411 können Grundkörper und Kolben am Hinterbau 15 bzw. am Rahmen 10 befestigt werden, so dass der Kolben 41 in Abhängigkeit der auf die Laufräder 12 einwirkenden Belastungen in der Luftkammer 421 einfedert. In anderen Ausführungsformen kann statt der Luftkammer 421 auch eine Schraubenfeder eingesetzt sein, beispielsweise aus Stahl.

Das Federungsverhalten und/oder das Dämpfungsverhalten und/oder der zur Verfügung stehende Federweg kann in einigen Ausführungsformen durch ein Betätigungsglied 423 beeinflusst werden. Hierdurch kann der Benutzer in an sich bekannter Weise das Ansprechverhalten der Hinterradfederung an den jeweiligen Betriebszustand des Fahrrades anpassen oder die Federung zeitweise komplett blockieren (Lock-Out).

Es wird vorgeschlagen, das Betätigungsglied 423 über den Nocken 433 einer Welle 432 zu betätigen. Die Welle 432 ist mit einem Elektromotor 431 verbunden, welcher im dargestellten Ausführungsbeispiel als Aktor wirkt. Das Ansteuersignal für den Aktor 431 wird im Elektronikmodul 6 erzeugt und über eine Funkverbindung übertragen, welche durch die HF-Platine 482 bereitgestellt wird. Eine zweite Platine 481 kann die empfangenen Signale decodieren und/oder eine H-Brücke aufnehmen, welche den Elektromotor 431 bestromt. Zur Energieversorgung der elektronischen Schaltungen 481 und 482 sowie des Aktors 431 steht eine Batterie 483 zur Verfügung. Diese kann über eine Ladebuchse wieder aufgeladen werden, welche nach Abnehmen der Schraubkappe 45 zugänglich wird. Der Ladezustand der Batterie 483 kann in einigen Ausführungsformen über die Betriebszustandsanzeige 21 am Bedienelement 2 visualisiert werden.

Die Elektronikmodule 481, 482, die Batterie 483 und der Aktor 431 können in einem Gehäuse 43 staub- und spritzwasserdicht untergebracht sein, so dass diese im Betrieb des Fahrrades 1 nicht beeinträchtigt werden. Für einen staubund spritzwasserdichten Abschluss kann der Schraubdeckel 45 mit einer Dichtung 451 versehen sein.

Schließlich wird anhand der Figuren 11 bis 15 ein Federelement 3 beschrieben, welches zum Einsatz an einer Federgabel vorgesehen ist (nicht zur Erfindung gehörend). Das Federelement 3 ist in an sich bekannter Weise im Standrohr 11 der Gabel angeordnet und setzt dem Eintauchen in das Tauchrohr 14 einen definierten Widerstand entgegen. Qualität und Quantität dieser Widerstandskraft charakterisieren das Federungsverhalten der Gabel und können durch eine Verstellmechanik 32 in an sich bekannter Weise eingestellt werden. Hierdurch kann die Federkraft, die Dämpfungskraft und/oder die Höhe der Gabel bzw. deren unbelastete Nulllage vom Benutzer eingestellt werden. Auch dies kann vorliegend entweder durch Benutzereingriff über das Bedienelement 2 bzw. dem darauf angeordneten Taster 25 erfolgen, oder automatisiert, indem das Elektronikmodul 2 in Abhängigkeit der Eingangsgrößen der optional vorhandenen Sensorik eine jeweils passende Charakteristik auswählt. Um den Verstellmechanismus 32 automatisiert zu bewegen, steht wiederum ein Aktor 431 zur Verfügung, welcher beispielsweise ein Elektromotor sein kann, ein Piezosteller oder ein Magnetsteller. Der Aktor 431 wird ebenso wie die Elektronik 381 und 382 von einem Akkumulator 383 mit elektrischer Energie versorgt. Wie vorstehend beschrieben kann die Elektronik des Federelementes 3 einen Hochfrequenzteil auf einer Platine 382 enthalten sowie eine Ansteuerlogik für den Aktor 431 auf einer weiteren Platine 381. In anderen Ausführungsformen können alle Elektronikkomponenten jedoch auch auf einer einzigen Platine angeordnet sein.

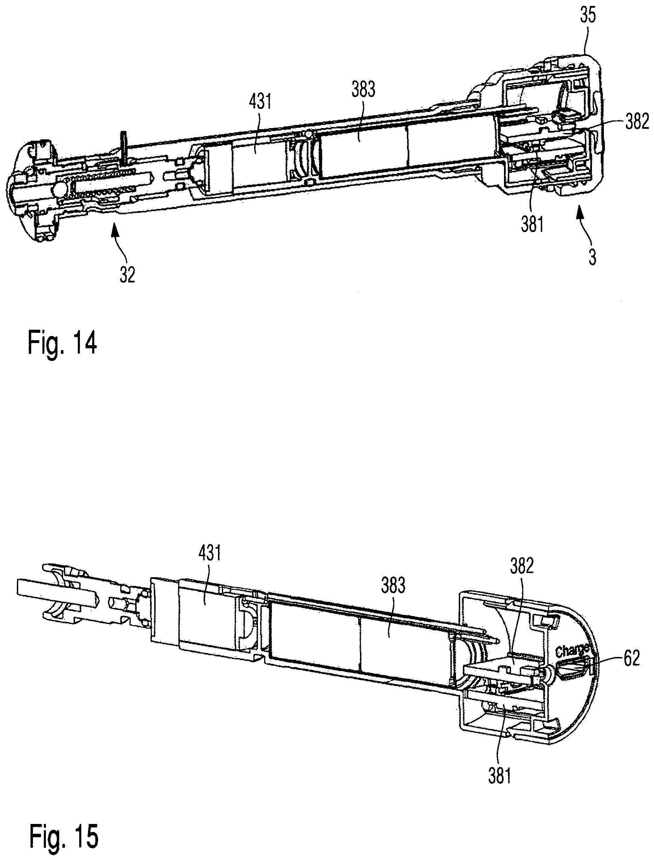

Für Wartungsarbeiten kann der in Figur 15 gezeigte Teil mit dem Aktor, der Batterie und der elektronischen Schaltung nach Lösen der Schraubkappe 35 aus der Gabel entfernt werden, um auf diese Weise beispielsweise den Akkumulator 383 auszutauschen. Darüber hinaus steht nach Lösen der Schraubkappe 35 ohne weitere Demontagearbeiten eine Ladebuchse 62 zur Verfügung, mit welcher der Akkumulator 383 im Normalbetrieb des Fahrrades wieder aufgeladen werden kann. Auch der Ladezustand des Akkumulators 383 kann vom Elektronikmodul 6 überwacht werden und mit der Betriebszustandsanzeige 21 visualisiert werden.

Das Federungssystem bietet somit einerseits die Möglichkeit, durch manuellen Benutzereingriff in bisher bekannter Weise das Ansprechverhalten des Federungssystems zu verändern, wobei jedoch aufgrund fehlender Bowdenzüge und/oder Verkabelung die Betriebssicherheit steigt und das Gewicht sinkt. Die elektronische Verstellung bietet dabei den Vorteil, dass die Federung an Vorder- und Hinterrad gleichzeitig verstellt werden kann. Weiterhin kann die beschriebene Federung aufgrund der in der Software des Elektronikmoduls 6 implementierten Algorithmen einen automatischen Fahrbetrieb ermöglichen, bei welchem das Federungsverhalten vorne und/oder hinten und/oder das Ansprechen einer optionalen gefederten Sattelstütze 16 an den jeweiligen Betriebszustand vollautomatisch angepasst wird. Die Anpassung kann dabei in Abhängigkeit der Geschwindigkeit, der Beschleunigung, der Lage, der Geländetopographie, der Fahrbahnbeschaffenheit und/oder des aufgebrachten Drehmomentes erfolgen.

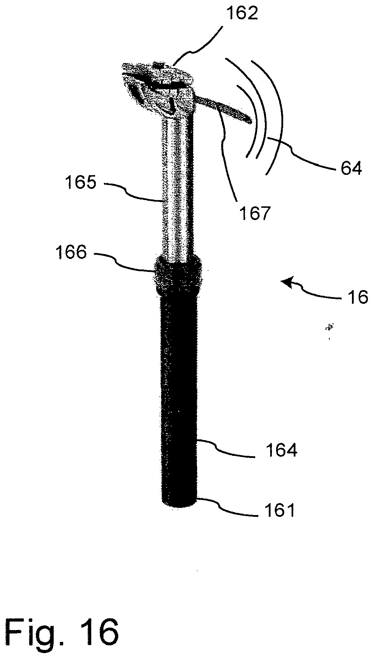

Figur 16 zeigt eine Ausführungsform der erfindungsgemäßen Sattelstütze. Die Sattelstütze 16 ist beispielsweise für ein Fahrrad verwendbar. Die Sattelstütze 16 weist ein erstes Ende 161 auf, welches mit einem Fahrradrahmen 10 verbindbar ist. Die Verbindung kann mit einer Klemmung erfolgen. Weiterhin kann die Sattelstütze 16 ein zweites Ende 162 aufweisen, welches mit einem Sattel verbindbar ist. Hierzu kann ein Klemmbolzen verwendet werden, welcher in einigen Ausführungsformen auch eine Einstellung der Neigung und/oder eine Längsverstellung des Sattels ermöglicht. Die Sattelstütze 16 weist zumindest einen oberen Längsabschnitt 165 und zumindest einen unteren Längsabschnitt 164 auf, welche ineinandergreifen und entlang ihrer Längserstreckung relativ zueinander verschiebbar sind. Je weiter der obere Längsabschnitt 165 in den unteren Längs-abschnitt 164 eingreift, um so tiefer ist die Einstellung des Sattels. Weiterhin weist die Sattelstütze eine Festlegevorrichtung 166 auf, mit welcher die zwei Längsabschnitte 164, 165 in einer vorgebbaren relativen Lage zueinander fixiert werden können. Die Festlegevorrichtung 166 ist durch ein Funksignal 64 beeinflussbar. Zum Empfang des Funksignals steht eine optionale Antenne 167 zur Verfügung.

Die zwei Längsabschnitte 164 und 165 sind über eine Gasdruckfeder miteinander verbunden, welche in den Figuren verdeckt und daher nicht sichtbar ist. Beim Lösen der Festlegevorrichtung 166 fährt daher der Längsabschnitt 165 aus, so dass sich die Sitzhöhe vergrößert. Die erfindungsgemäße Sattelstütze erlaubt somit ein einfaches Verstellen der Sattelhöhe während der Fahrt, so dass die Sitzhöhe an den jeweiligen Fahrtzustand angepasst werden kann. Wenn das Funksignal 64 mit einem Bedienelement 2 erzeugt wird, kann der Fahrer bei der Verstellung der Sitzhöhe beide Hände am Lenker lassen, so dass eine sichere Kontrolle über das Fahrrad ermöglicht wird. Erfindungsgemäß wird das Funksignal 64 von einem Elektronikmodul 6 erzeugt, so dass eine automatische Höhenverstellung in Abhängigkeit des Fahrzustandes ermöglicht wird. Sofern die Sattelstütze einen Weggeber aufweist, welcher die Position der Sattelstütze 16 an das Elektronikmodul 6 meldet, kann das Elektronikmodul 6 diese Daten wiederum zur Ermittlung eines Ansteuersignals für die Fahrwerkskomponenten verwenden.

## Patentansprüche

1. Sattelstütze (16) für ein Fahrrad, mit einem ersten Ende (161), welches mit einem Fahrradrahmen (10) verbindbar ist und einem zweiten Ende (162), welches mit einem Sattel verbindbar ist, wobei die Sattelstütze (16) zumindest zwei Längsabschnitte (164, 165) aufweist, welche ineinandergreifen und entlang ihrer Längserstreckung relativ zueinander verschiebbar sind, wobei die Sattelstütze weiterhin eine Festlegevorrichtung (166) aufweist, mit welcher die zwei Längsabschnitte (164, 165) in einer vorgebbaren relativen Lage zueinander fixiert werden können,
**dadurch gekennzeichnet, dass**
die Festlegevorrichtung (166) durch ein Funksignal (64) beeinflussbar ist, welches von einem Elektronikmodul (6) erzeugt werden kann, so dass eine automatische Höhenverstellung in Abhängigkeit des Fahrzustandes ermöglicht wird, wobei das Elektronikmodul (6) einen dreiachsigen mikromechanischen Beschleunigungsensor enthält.

2. Sattelstütze nach Anspruch 1, weiterhin enthaltend eine Antenne, mit welcher das Funksignal empfangbar ist.

3. Sattelstütze nach Anspruch 1 oder 2, **dadurch gekennzeichnet, dass** das Funksignal (64) durch ein Bedienelement (2) erzeugbar ist.

4. Sattelstütze nach Anspruch 1, **dadurch gekennzeichnet, dass** das Funksignal (64) von dem Elektronikmodul (6) in Abhängigkeit der Geländetopographie erzeugbar ist.

5. Sattelstütze nach einem der Ansprüche 1 bis 4, **dadurch gekennzeichnet, dass** das Elektronikmodul (6) und/oder das Bedienelement (2) ein Mobiltelefon enthält oder daraus besteht.

6. Sattelstütze nach einem der Ansprüche 1 bis 5, **dadurch gekennzeichnet, dass** das Elektronikmodul (6) dazu eingerichtet ist, eine Geschwindigkeit und/oder eine Lage durch Integration der Daten des dreiachsigen mikromechanischen Beschleunigungssensors über die Zeit zu bestimmen.

7. Sattelstütze nach einem der Ansprüche 1 bis 6, **dadurch gekennzeichnet, dass** das Elektronikmodul (6) zumindest einen ersten Betriebszustand und zumindest einen zweiten Betriebszustand aufweist, wobei im zweiten Betriebszustand gegenüber dem ersten Betriebszustand die Anzahl ausführbarer Funktionen reduziert und der Energieverbrauch vermindert ist.

8. Sattelstütze nach Anspruch 7, **dadurch gekennzeichnet, dass** das Elektronikmodul (6) dazu eingerichtet ist, vom ersten Betriebszustand in den zweiten Betriebszustand zu schalten, wenn über eine vorgebbare Zeit keine Beschleunigung erfasst wird und/oder
dass das Elektronikmodul (6) dazu eingerichtet ist, vom zweiten Betriebszustand in den ersten Betriebszustand zu schalten, wenn eine Beschleunigung erfasst wird.

9. Sattelstütze nach einem der Ansprüche 1 bis 8, **dadurch gekennzeichnet, dass** das Elektronikmodul (6) dazu eingerichtet ist, zusätzlich zur Position der Sattelstütze auch zumindest ein Federungselement am Vorder- und/oder Hinterrad zu beeinflussen.

10. Sattelstütze nach einem der Ansprüche 1 bis 9, **dadurch gekennzeichnet, dass** die zwei Längsabschnitte (164, 165) über eine Gasdruckfeder miteinander verbunden sind.

## Claims

1. Seat post (16) for a bicycle, comprising a first end (161), which can be connected to a bicycle frame (10), and a second end (162), which can be connected to a saddle, wherein the seat post (16) has at least two longitudinal portions (164, 165), which mesh with one another and can be moved along their longitudinal extension in relation to one another, wherein the seat post also has a securing device (166), by means of which the two longitudinal portions (164, 165) can be fixed at a predeterminable relative position to one another,
**characterized in that**
the securing device (166) can be influenced by a radio signal (64), which can be produced by an electronic module (6) so as to render possible an automatic height adjustment depending on the condition of the vehicle, the electronic module (6) containing a triaxial micromechanical acceleration sensor.

2. Seat post according to claim 1, further containing an antenna by means of which the radio signal can be received.

3. Seat post according to claim 1 or 2, **characterized in that** the radio signal (64) can be produced by an operating element (2).

4. Seat post according to claim 1, **characterized in that** the radio signal (64) can be produced by the electronic module (6) in accordance with the terrain topography.

5. Seat post according to any of claims 1 or 4, **characterized in that** the electronic module (6) and/or the operating element (2) contains a cellular phone or consists thereof.

6. Seat post according to any of claims 1 to 5, **characterized in that** the electronic module (6) is designed to determine a speed and/or a position by integration of the data of the triaxial micromechanical acceleration sensor over time.

7. Seat post according to any of claims 1 to 6, **characterized in that** the electronic module (6) has at least one first operating state and at least one second operating state, wherein compared to the first operating state the number of feasible functions is reduced and the energy consumption is reduced in the second operating state.

8. Seat post according to claim 7, **characterized in that** the electronic module (6) is designed to switch from the first operating state into the second operating state if no acceleration is detected over a predeterminable time and/or in that the electronic module (6) is designed to switch from the second operating state into the first operating state if an acceleration is detected.

9. Seat post according to any of claims 1 to 8, **characterized in that** the electronic module (6) is designed to influence in addition to the position of the seat post also at least one spring element at the front wheel and/or rear wheel.

10. Seat post according to any of claims 1 to 9, **characterized in that** the two longitudinal portions (164, 165) are connected to one another via a gas compression spring.

## Revendications

1. Tige de selle (16) pour une bicyclette, comportant une première extrémité (161) qui est susceptible d'être reliée à un cadre (10) de la bicyclette et une seconde extrémité (162) qui est susceptible d'être reliée à une selle, la tige de selle (16) comprenant au moins deux portions allongées (164, 165) qui s'engagent mutuellement et qui sont mobiles l'une par rapport à l'autre selon leur extension longitudinale, la tige de selle comprenant en outre un dispositif d'immobilisation (166) au moyen duquel les deux portions allongées (164, 165) peuvent être fixées l'une par rapport à l'autre dans une position relative prédéterminée,
**caractérisée en ce que**
le dispositif d'immobilisation (166) est susceptible d'être influencé par un signal radio (64) qui peut être généré par un module électronique (6), de manière à permettre un déplacement en hauteur automatique en fonction de l'état de déplacement, le module électronique (6) comprenant un capteur d'accélération micromécanique à trois axes.

2. Tige de selle selon la revendication 1, comprenant en outre une antenne par laquelle le signal radio peut être reçu.

3. Tige de selle selon la revendication 1 ou 2, **caractérisée en ce que** le signal radio (64) peut être généré par un élément de manipulation (2).

4. Tige de selle selon la revendication 1, **caractérisée en ce que** le signal radio (64) peut être généré par le module électronique (6) en fonction de la topographie du terrain.

5. Tige de selle selon l'une des revendications 1 à 4, **caractérisée en ce que** le module électronique (6) et/ou l'élément de manipulation (2) comprend un téléphone portable ou est constitué par un téléphone portable.

6. Tige de selle selon l'une des revendications 1 à 5, **caractérisée en ce que** le module électronique (6) est conçu pour déterminer une vitesse et/ou une position par intégration des données du capteur d'accélération micromécanique à trois axes sur le temps.

7. Tige de selle selon l'une des revendications 1 à 6, **caractérisée en ce que** le module électronique (6) présente au moins un premier état de fonctionnement et au moins un second état de fonctionnement, et dans le second état de fonctionnement le nombre de fonctions exécutables et la consommation d'énergie sont réduits par rapport à ceux dans le premier état de fonctionnement.

8. Tige de selle selon la revendication 7, **caractérisée en ce que** le module électronique (6) est conçu pour passer du premier état de fonctionnement vers le second état de fonctionnement lorsqu'aucune accélération n'est détectée pendant un temps prédéterminé, et/ou
**en ce que** le module électronique (6) est conçu pour passer du second état de fonctionnement vers le premier état de fonctionnement lorsqu'une accélération est détectée.

9. Tige de selle selon l'une des revendications 1 à 8, **caractérisée en ce que** le module électronique (6) est conçu pour influencer, en supplément à la position de la tige de selle, également au moins un élément de suspension sur la roue avant et/ou arrière.

10. Tige de selle selon l'une des revendications 1 à 9, **caractérisée en ce que** les deux portions allongées (164, 165) sont reliées l'une à l'autre via un ressort pneumatique.
